# NEUE EUROPÄISCHE PATENTSCHRIFT

(11) **EP 2 242 327 B2**
(45) Veröffentlichungstag und Bekanntmachung des Hinweises auf die Entscheidung über den Einspruch: **25.03.2020**
(45) Hinweis auf die Patenterteilung: 25.05.2016
(21) Anmeldenummer: 10002636.8
(22) Anmeldetag: 12.03.2010
(51) Int. Cl.: H05B 3/50, B60H 1/22, F24H 3/04

(54) **Elektrische Heizvorrichtung**
Electric heating device
Dispositif de chauffage électrique

(30) Priorität: 14.04.2009 DE 202009005582 U
(43) Veröffentlichungstag der Anmeldung: 20.10.2010
(73) Patentinhaber: Eberspächer catem GmbH & Co. KG, 76863 Herxheim (DE)
(72) Erfinder: Clade, Michael, 67245 Lambsheim (DE); Bohlender, Franz, 76870 Kandel (DE); Bernhart, Erik, 67630 Lauterburg (FR)
(74) Vertreter: Grünecker Patent- und Rechtsanwälte PartG mbB

(56) Entgegenhaltungen:
- EP-A1- 1 502 784
- EP-A1- 1 503 153
- EP-A1- 1 521 499
- EP-A1- 1 521 499
- EP-A1- 1 580 495
- EP-A1- 1 580 495
- EP-A1- 1 621 378
- EP-A1- 1 691 579
- EP-A1- 1 928 214
- EP-A1- 1 928 214
- EP-A2- 1 130 337
- EP-B1- 0 350 528
- EP-B1- 1 061 776
- EP-B1- 1 574 791
- WO-A2-02/057100
- WO-A2-02/057100
- DE-A1- 19 811 629
- DE-U1-202007 001 079
- DE-U1-202007 001 079

## Beschreibung

Die vorliegende Erfindung betrifft eine elektrische Heizvorrichtung für ein Kraftfahrzeug mit einem Rahmen, in dem ein geschichteter umfassend mehrere parallele Blechbänder und dazwischen angeordnete PTC-Elemente aufweisende PTC-Heizstäbe und mehrere Radiatorelemente vorgesehen sind, wobei ausgewählte Blechbänder der PTC-Heizstäbe zur Bildung von elektrischen Anschlussfahnen seitlich über den geschichteten Aufbau hinaus verlängert sind, und mit einem mit dem Rahmen verbundenen Steckergehäuse.

Eine derartige gattungsgemäße elektrische Heizvorrichtung ist beispielsweise aus der auf die Anmelderin zurückgehenden EP 1 157 867 B1 bzw. der EP 1 432 287 A1 bekannt. Bei dem letztgenannten Stand der Technik ist das Steckergehäuse mit dem Rahmen verrastet und weist Durchlässe für die ausgewählten Blechbänder auf. Teilweise sind die Blechbänder relativ zu den Ebenen der PTC-Heizstäbe innerhalb des geschichteten Aufbaus durch Umbiegen versetzt vorgesehen.

Bei dem vorerwähnten gattungsbildenden Stand der Technik sind mehrere Blechbänder zur Ausbildung von Anschlussfahnen innerhalb des Steckergehäuses zum elektrischen Anschluss an einen Gegenstecker vorgesehen (EP 1 432 287 A1). Bei dem anderen zuvor genannten Stand der Technik (EP 1 157 867 B1) ist innerhalb des Steckergehäuses eine Steuervorrichtung vorgesehen, welche eine Platine aufweist, mit welcher ausgewählte Blechbänder respektive deren Anschlussfahnen elektrisch verbunden sind. Das Steckergehäuse dient in dem letztgenannten Fall zum Anstecken des Anschlusses an den geschichteten Aufbau. Es weist aber auch Anschlüsse für den Leistungsstrom auf, die als Steckeranschlüsse ausgebildet sein können. Des Weiteren hat das Steckergehäuse üblicherweise elektrische Steckkontakte für die Steuerleitung, die zu der Leiterplatte innerhalb des Steckergehäuses führt.

Der vorliegenden Erfindung liegt das Problem zugrunde, eine einfach aufgebaute elektrische Heizvorrichtung für ein Kraftfahrzeug anzugeben.

Zur Lösung dieses Problems wird mit der vorliegenden Erfindung eine elektrische Heizvorrichtung mit den Merkmalen von Anspruch 1 angegeben. Diese unterscheidet sich von dem gattungsbildenden Stand der Technik dadurch, dass in dem Steckergehäuse ein Anschlusselement vorgesehen ist, welches eine Steckerzunge und wenigstens eine Kontaktzungenaufnahme ausbildet. Durch die Kontaktzungenaufnahme kann ein Kontakt zwischen dem Anschlusselement und wenigstens einer zugeordneten Anschlussfahne ausgebildet werden. Das Anschlusselement verbindet dementsprechend als separates Bauteil elektrisch eine an dem Steckergehäuse freiliegende Anschlusszunge zum Anschluss der elektrischen Heizvorrichtung, üblicherweise an den Leistungsstrom mit einer, vorzugsweise mehreren Anschlussfahnen. Das entsprechende Anschlusselement bildet somit eine einfach ausgebildete elektrische Brücke, um die mehreren, vorzugsweise in Verlängerung der PTC-Heizstäbe vorgesehenen Anschlussfahnen mit wenigstens einer Anschlusszunge elektrisch zu verbinden.

Mit dieser Ausgestaltung kann das Umbiegen von Blechbändern zur gewünschten Anordnung der durch diese ausgebildeten Anschlussfahnen verzichtet werden. Die PTC-Heizstäbe lassen sich daher ohne lagebezogene Individualisierung in den geschichteten Aufbau einbauen. Sämtliche PTC-Heizstäbe können daher identisch ausgebildet sein. Des Weiteren kann beispielsweise auf eine Platine oder dergleichen zum elektrischen Anschluss an den geschichteten Aufbau, der auch als Heizblock bezeichnet wird, verzichtet werden.

Die Anschlusselemente sind vorzugsweise als Stromschienen ausgebildet, d.h. sind aus einem Blechstreifen mit guter elektrischer Leitfähigkeit ausgeformt. Vorzugsweise ist das wenigstens eine Anschlusselement durch Stanz-Biege-Bearbeitung hergestellt. Besonders bevorzugt sind lediglich zwei Anschlusselemente vorgesehen. Diese bilden im Bereich des Steckergehäuses zwei Anschlusszungen zum Anschluss an Masse einerseits und an den Plus-Pol des Fahrzeuges andererseits aus. Diese beiden Anschlusselemente verbinden vorzugsweise sämtliche aus dem geschichteten Aufbau herausgeführten Anschlussfahnen.

Die vorliegende Erfindung bietet den Vorteil, eine an sich verfügbare und beispielsweise für den Betrieb in Verbindung mit einer elektronischen Steuerungsvorrichtung mit Leistungstransistoren, die auf einer Leiterplatte vorgesehen sind, wobei die Leiterplatte elektrisch mit den jeweiligen Anschlussfahnen verbunden werden kann, bereits bestehende elektrische Heizvorrichtung als einfachste Ausgestaltung auszuformen, bei welcher sämtliche Anschlussfahnen elektrisch mit den beiden Anschlusszungen verbunden sind. Die ansonsten bei Einbau einer aufwendigen Steuervorrichtung in das Steckergehäuse aufwendig ausgestaltete elektrische Heizvorrichtung kann danach einfach ausgebildet werden, wobei in dem einfachen Fall, bei dem sämtliche Anschlussfahnen über die zwei Anschlusselemente elektrisch verbindbar sind, auf Heizstufen verzichtet wird. Vielmehr kann die elektrische Heizvorrichtung lediglich vollständig ein- bzw. ausgeschaltet werden. Einzelne Heizstränge können bei einer derartigen Ausgestaltung nicht separat angesteuert werden, was bis heute mit Rücksicht auf die nur begrenzt verfügbare Bordnetzspannung als nachteilig angesehen wird.

Gemäß der vorliegenden Erfindung bilden die Anschlusselemente wenigstens einer Kontaktzungenaufnahme in Form einer Lasche aus, welche den Steckkontakt ausbildet. Die Lasche ist danach so ausgeformt, dass sie die Anschlussfahne in sich aufnimmt und dabei das Anschlusselement elektrisch mit der zugeordneten Anschlussfahne verbindet. Die Lasche ist durch Blechbiegen geformt und hat wenigstens einen Abschnitt, der mit einer gewissen elastischen Vorspannung an der Außenfläche der Anschlussfahne anliegt, um diese sicher elektrisch mit dem Anschlusselement zu kontaktieren. Das Anschlusselement weist wenigstens zwei Laschen auf, um zwei unterschiedliche Anschlussfahnen mit dem Anschlusselement elektrisch zu kontaktieren. Bei dieser Ausgestaltung erstreckt sich das besagte Anschlusselement über mehrere Schichten des Schichtaufbaus und erstreckt sich regelmäßig quer zu selbigen. Üblicherweise erstreckt sich ein solcher Art ausgebildetes Anschlusselement als länglicher Blechstreifen im Wesentlichen rechtwinklig zu der Erstreckung der einzelnen Blechbänder bzw. Anschlussfahnen. Eine solche Ausgestaltung erlaubt eine relativ kompakt bauende elektrische Heizvorrichtung mit einem relativ kompakten Steckergehäuse.

Im Hinblick auf eine bestmögliche elektrische Kontaktierung mit den Anschlussfahnen weist jede einer entsprechenden Anschlussfahne zugeordnete Lasche gegenläufig und aufeinander zu umbogene Laschenarme auf, deren freie Enden gegenüberliegend einer Laschenbasis vorgesehen sind. Die Basis erstreckt sich dabei vorzugsweise im Wesentlichen parallel zu einer Längsseite der Anschlussfahne. Entsprechendes gilt für die beiden gegenüberliegend der Laschenbasis vorgesehenen Laschenarme. Dabei kann die mit der Anschlussfahne zusammenwirkende Oberfläche der Laschenbasis bzw. die Oberflächen der Laschenarme so ausgestaltet sein, dass eine punktuelle und vorbestimmte Kontaktfläche gegeben ist. So kann eine sich konvex in Richtung auf die Anschlussfahne vorgesehene Wölbung ausgebildet sein, die darüber hinaus zur verbesserten elektrischen Leitung mit einem gut leitenden Material wie beispielsweise Silber oder einer Silber-Zinn-Legierung beschichtet ist. Die Laschenarme sollten so in Richtung auf die Anschlussfahne geformt sein, dass diese eine gewisse elastische Anlage an der der Laschenbasis gegenüberliegenden Längsseite der Anschlussfahne bewirken.

Gemäß der vorliegenden Erfindung, bei der die Laschenbasis in Einsteckrichtung der Anschlussfahnen eine größere Erstreckung als die Laschenarme hat, wird davon ausgegangen, dass die Laschenarme zwar eine gewisse elektrische Kontaktierung mit der Anschlussfahne bewirken, jedoch hauptsächlich die Laschen durch elastische Vorspannung mit der Anschlussfahne kontaktieren und so einen Steckkontakt ausbilden, wohingegen die Laschenbasis durch die gegenüber der Laschenarme vergrößerte Oberfläche vornehmlich die elektrische Übertragung des Leistungsstromes bewirkt.

Bevorzugte Weiterbildungen der Erfindung sind in den weiteren abhängigen Ansprüchen angegeben.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Längsschnittansicht mit geschnittenem Steckergehäuse des Ausführungsbeispiels;

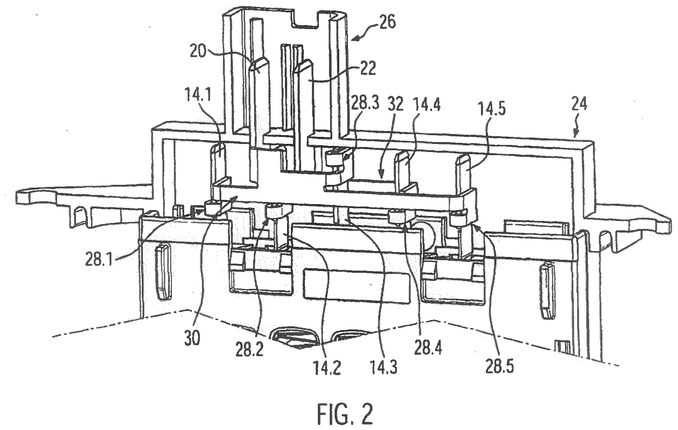

- Figur 2: das Steckergehäuse des Ausführungsbeispieles nach Figur 1 in vergrößerter Darstellung, und
- Figur 3: die beiden Anschlusselemente des Ausführungsbeispieles in einer im Ausführungsbeispiel verwirklichten Anordnung zueinander.

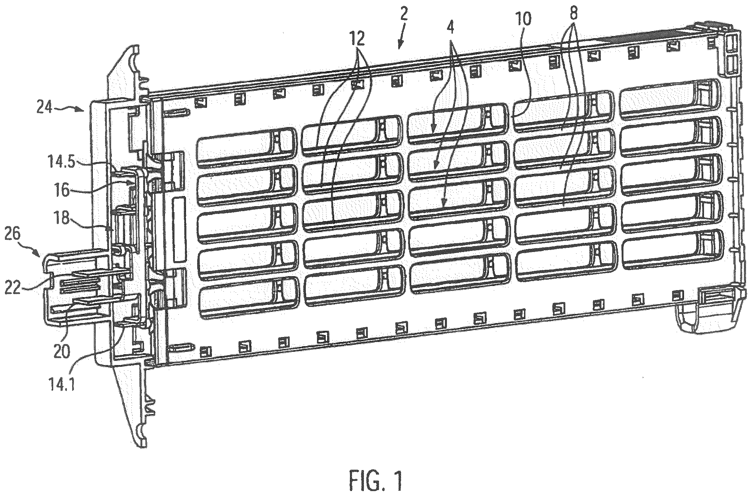

Figur 1 zeit schematisch eine elektrische Heizvorrichtung mit einem zweiteiligen Kunststoffrahmen 2, dessen Rahmenschalen miteinander verclipst sind und der einen Heizblock umfassend mehrere mit Bezugszeichen 4 gekennzeichnete PTC-Heizstäbe und in der Darstellung nicht gezeigte Radiatorelemente in sich aufnimmt. Der Rahmen hat eine Rahmenöffnung 6, die durch Längsstreben 8 und Querstreben 10 durchsetzt ist. Die Querstreben 10 dienen der Verstärkung des Rahmens 2 und der Widerlagerung einer Kraft, die durch eine beispielsweise jedenfalls einseitig am Längsrand des Rahmens 2 in diesem aufgenommenen Feder bewirkt wird. Diese Feder verspannt die Lagen des geschichteten Heizblock innerhalb des Rahmens 2 gegeneinander.

Die Längsstreben 8 befinden sich auf Höhe der einzelnen PTC-Heizstäbe 4. Man muss sich vorstellen, dass zwischen benachbarten Längsstreben 8 jeweils eine der Lamellenlagen vorgesehen ist in Form eines mäandrierend gebogenen Blechstreifens, beispielsweise eines Aluminiumblechs.

Die PTC-Heizstäbe 4 bestehend aus sich parallel erstreckenden Blechbändern, die zwischen sich vorliegend nicht gezeigte PTC-Elemente in sich aufnehmen. Diese PTC-Elemente sind üblicherweise in einem sogenannten Positionsrahmen aufgenommen, der mit geringere Dicke als die PTC-Elemente diese zwischen den beiden Blechbändern hält.

Bei dem gezeigten Ausführungsbeispiel ist jeweils eines der Blechbänder seitlich über den geschichteten Aufbau hinaus verlängert. Es sei angenommen, dass es sich hierbei um die Enden der in der Zeichnung wiedergegebenen Blechbänder 12 handelt, die außerhalb des geschichteten Aufbaus Anschlussfahnen 14 ausbilden. Die Anschlussfahnen 14 sind mit geringerer Breite als die Blechbänder 12 im Bereich des geschichteten Aufbaus vorgesehen. Sämtliche Anschlussfahnen 14 erstrecken sich parallel zueinander und sind im Wesentlichen mit konstantem Abstand relativ zueinander vorgesehen. Die Anschlussfahnen 14 liegen außerhalb des Rahmens 12 frei und sind sämtlich mit Anschlusselementen 16, 18 elektrisch kontaktiert. Konkret sind die Anschlussfahnen 14.1, 14.3 und 14.5 mit dem als Plus-Anschlusselement ausgebildeten Bauteil 16 verbunden, wohingegen die Anschlussfahnen 14.2 und 14.4 elektrisch mit dem Masse-Anschlusselement 18 verbunden sind. Die jeweiligen Anschlusselemente 16, 18 bilden Anschlusszungen 20, 22 zu einem Kontaktstecker für den Leistungsstrom aus, die mit einer Erstreckung parallel zu den Blechbändern 12 ausgerichtet sind.

Die Anschlusselemente 16, 18 befinden sich in einem Steckergehäuse 24, das exzentrisch von einem Steckergehäuseteil 26 überragt wird, welches die Anschlusszungen 20, 22 in sich aufnimmt und Funktionsflächen für die Verrastung eines nicht gezeigten Gegensteckers, der weibliche Steckkontakt zur Aufnahme der Anschlusszungen 20, 22 umfasst, ausbildet.

Das Plus-Anschlusselement 16 umfasst drei durch Stanzbearbeitung ausgeformte Laschen 28, die in Erstreckungsrichtung der Anschlussfahnen 14 seitlich neben einem Anschlusssteg 30 vorgesehen und einteilig mit diesem ausgebildet sind. Der besagte Anschlusssteg 30 des Plus-Anschlusselementes 16 hat endseitig zwei Laschen 28.1 und 28.5, die relativ zu dem Anschlusssteg 30 in Richtung auf den geschichteten Aufbau hin versetzt vorgesehen sind, und eine Lasche 28.3, die auf der gegenüberliegenden Seite versetzt zu dem Anschlusssteg 30 an diesen angeformt ist. Die Laschen sind durch Freischneiden und Umbiegen, d.h. mittels Stanz-Biege-Bearbeitung aus einem Blechstück geformt, welches den Anschlusssteg 30 sowie die zugehörige Anschlusszunge 20 ausformt. Auch die Anschlusszunge 20 ist durch Umbiegen relativ zu der Erstreckungsebene des Anschlusssteges 30 parallel zu der Erstreckungsrichtung der Anschlussfahnen 14 vorgesehen.

Das Masse-Anschlusselement 18 hat lediglich zwei Laschen 28.2 und 28.4, welche einen Anschlusssteg 32 des Masse-Anschlusselementes 18 in Richtung auf den geschichteten Aufbau überragen.

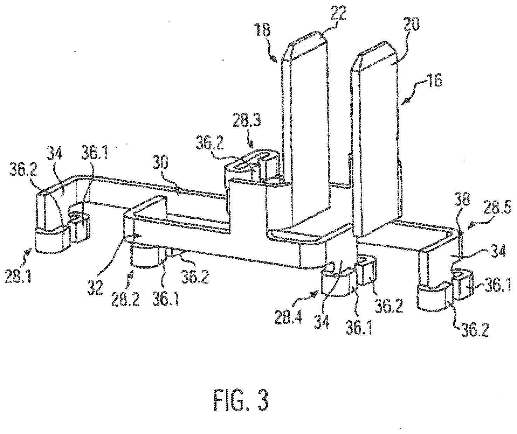

Sämtliche Laschen 28 sind zur federnden Aufnahme zugeordneter Anschlussfahnen 14 ausgeformt. Jede einzelne der Laschen 28 hat - wie in Figur 3 verdeutlicht - einen sich parallel zu einer Hauptseitenfläche der zugeordneten Anschlussfahne 14 erstreckende Laschenbasis 34 sowie zwei von der Laschenbasis 34 an gegenüberliegenden Seiten abgehende Laschenarme 36, deren freie Enden sich im Wesentlichen parallel zu der Laschenbasis 34 erstreckt. Die Laschenarme 36 sind derart umbogen, dass sie die zugeordnete Anschlussfahne 14 elastisch aufnehmen und elektrisch mit dem zugeordneten Anschlusselement 16 bzw. 18 kontaktieren.

Wie aus Figur 3 ersichtlich, sind die entsprechenden Laschen 28 und die Anschlussstege 30, 32 sowie die zugehörigen Anschlusszungen 20 bzw. 22 aus einem Blechstreifen durch Stanzen und Biegen ausgebildet.

Die an dem Plus-Anschlusselement 16 vorgesehenen Laschen 28.1, 28.3 und 28.5 sind an der gleichen Seite seitlich zu dem Anschlusssteg 30 vorgesehen. In gegenläufiger Richtung ist das Blechmaterial des Masse-Anschlusselementes 18 gebogen, so dass deren Lasche 28.2 sich zwischen den Laschen 28.1 und 28.3 für den Pluspol und deren Lasche 28.4 sich zwischen den Laschen 28.3 und 28.5 für den Pluspol befindet. Die in Figur 3 gezeigte Anordnung ist nur unwesentlich breiter als die Breite der Anschlusszungen 20, 22 bzw. der jeweiligen Laschen 28. Als Breite ist diejenige Erstreckung zu verstehen, die sich rechtwinklig zu der Längserstreckung der jeweiligen Anschlussstege 30 bzw. 32 erstreckt.

Von den Laschenarmen 36 der Laschen 28 ist jeweils ein erster Laschenarm 36.1 durch einen Freischnitt gegenüber dem Anschlusssteg und ein zweiter Laschenarm 36.2 durch Freischneiden gegenüber der Laschenbasis 34, die einen Befestigungsabschnitt 38 ausbildet, gebildet. An dem Plus-Anschlusselement 16 bilden die beiden äußeren Laschen 28.1 und 28.5 jeweils Stützpunkte für die Befestigung des entsprechenden Anschlusselementes 16, 18 an den Blechbändern 12 aus. Diese Stützpunkte werden beim Aufschieben des Steckergehäuses 24 auf den Rahmen 2 in der nachfolgend beschriebenen Weise wirksam.

Das Steckergehäuse 24 ist durch Aufclipsen auf der den Kunststoffrahmen 2 mit diesem befestigt. Dabei werden zunächst die Anschlussfahnen 14 in die zugeordneten Laschen 28 eingeschoben. Mit fortschreitender Aufsteckbewegung gleiten die Laschen 28 entlang der entsprechenden Anschlussfahnen 14. Die Bewegung findet ihr Ende, wenn das Steckergehäuse 24 mit den dem stirnseitigen Rand des Rahmens 2 verrastet. Einzelne Laschen 28 können dabei so in Bezug auf die zugeordneten Blechbänder 12 angeordnet sein, dass am Übergang zwischen den etwas breiteren Blechbändern 12 und den durch diese Blechbänder 12 gebildeten Anschlussfahnen 14 eine Anlage der Laschen 28 bewirkt wird. Die Anschlusselemente 16, 18 sind vorzugsweise durch Umspritzen mit dem Kunststoffmaterial des Steckergehäuses 24 verbunden.

### Bezugszeichenliste

- 2: Rahmen
- 4: PTC-Heizstäbe
- 6: Rahmenöffnung
- 8: Längsstreben
- 10: Querstreben
- 12: Blechbänder
- 14: Anschlussfahnen
- 16: Anschlusselement (Plus-Pol)
- 18: Anschlusselement (Masse-Pol)
- 20: Anschlusszunge (Plus-Pol)
- 22: Anschlusszunge (Masse-Pol)
- 24: Steckergehäuse
- 26: Steckergehäuseteil
- 28: Lasche
- 30: Anschlusssteg (Plus-Pol)
- 32: Anschlusssteg (Masse-Pol)
- 34: Laschenbasis
- 36: Laschenarm
- 36.1: erster Laschenarm
- 36.2: zweiter Laschenarm
- 38: Laschenbefestigungsabschnitt

## Patentansprüche

1. Elektrische Heizvorrichtung für ein Kraftfahrzeug mit einem Rahmen (2) in dem ein geschichteter Aufbau umfassend mehrere parallele Blechbänder (12) und dazwischen angeordnete PTC-Elemente aufweisende PTC-Heizstäbe (4) und mehrere Radiatorelemente vorgesehen ist, wobei ausgewählte Blechbänder (12) der PTC-Heizstäbe (4) zur Bildung von elektrischen Anschlussfahnen (14) seitlich über den geschichteten Aufbau hinaus verlängert sind, und mit einem mit dem Rahmen (2) verbundenen Steckergehäuse (24), **gekennzeichnet durch**
in dem Steckergehäuse (24) aufgenommene Anschlusselemente (16; 18), die jeweils eine Steckerzunge (20; 22) und wenigstens eine Kontaktzungenaufnahme (28), durch welche ein Steckkontakt zwischen dem Anschlusselement (16, 18) und einer zugeordneten Anschlussfahne (14) gebildet ist, ausbilden, wobei die Anschlusselemente (16; 18) jeweils einen mehrere Schichten des Schichtaufbaus überbrückenden Anschlusssteg (30; 32) aufweisen, an dem zur Ausbildung jeweils einer Kontaktzungenaufnahme (28) wenigstens zwei durch Blechbiegen ausgeformte Laschen (28.2, 28.4; 28.1, 28.3, 28.5) vorgesehen sind, wobei die Laschen (28) gegenläufig und aufeinander zu umbogene Laschenarme (36) sowie eine gegenüberliegend der freien Enden der Laschenarme (36) vorgesehene Laschenbasis (34) umfassen, wobei die Laschenbasis (34) in Einsteckrichtung der Anschlussfahnen (14) eine größere Erstreckung hat als die Laschenarme (36) und wobei die Laschenbasis (34) rechtwinklig zu dem Anschlusssteg (30; 32) ausgebildet ist.

2. Elektrische Heizvorrichtung nach Anspruch 1, **gekennzeichnet durch** ein Masse-Anschlusselement (18) und ein Plus-Anschlusselement (16), wobei das Masse-Anschlusselement (18) in dem Steckergehäuse (24) eine Masse-Anschlusszunge (22) und das Plus-Anschlusselement (16) in dem Steckergehäuse (24) eine Plus-Anschlusszunge (20) ausbildet.

3. Elektrische Heizvorrichtung nach Anspruch 1, **dadurch gekennzeichnet, dass** die Laschenbasis (34) über einen sich parallel zu dem Anschlusssteg (30; 32) erstreckenden Laschenbefestigungsabschnitt (38) mit dem Anschlusssteg (30; 32) verbunden ist.

4. Elektrische Heizvorrichtung nach Anspruch 1, **dadurch gekennzeichnet, dass** die Laschenbasis (34) durch Freischneiden gegenüber dem Anschlusssteg (30; 32) und einer der Laschenarme (36.1) durch Freischneiden gegenüber der Laschenbasis (34) und der andere Laschenarm (36.2) durch Freischneiden gegenüber dem Anschlusssteg (30, 32) gebildet sind.

5. Elektrische Heizvorrichtung nach einem der vorherigen Ansprüche, **dadurch gekennzeichnet, dass** sich die Steckerzunge (20; 22) rechtwinklig zu dem Anschlusssteg (30; 32) des zugeordneten Anschlusselementes (16; 18) erstreckt.

6. Elektrische Heizvorrichtung nach einem der vorherigen Ansprüche, **dadurch gekennzeichnet, dass** die Anschlussfahnen (14) mit geringerer Breite als die Blechbänder (12) ausgebildet sind und dass die einer Anschlussfahne (14) zugeordnete Lasche (28) auf einem Übergang zwischen der Anschlussfahne (14) und dem zugeordneten Blechband (12) aufsitzt.

7. Elektrische Heizvorrichtung nach Anspruch 6, **dadurch gekennzeichnet, dass** wenigstens zwei Laschen (28.1, 28.3) jeweils eines Anschlusselementes (16; 18) auf dem Übergang zwischen dem Blechband (12) und der Anschlussfahne (14) aufsitzen.

8. Elektrische Heizvorrichtung nach einem der vorherigen Ansprüche, **dadurch gekennzeichnet, dass** sämtliche Anschlussfahnen (14) elektrisch über die Anschlusselemente (16; 18) angeschlossen sind.

9. Elektrische Heizvorrichtung nach einem der vorherigen Ansprüche, **dadurch gekennzeichnet, dass** die Anschlussfahnen (14) in dem Steckergehäuse (24) befestigt sind und dass das Steckergehäuse (24) auf den Rahmen (2) aufgesteckt ist.

10. Elektrische Heizvorrichtung nach einem der vorherigen Ansprüche, **dadurch gekennzeichnet, dass** der Rahmen (2) und das Steckergehäuse (24) aus Kunststoff gebildet sind.

## Claims

1. An electric heating device for a motor vehicle, comprising a frame (2) having provided therein a layered structure, which includes a plurality of parallel sheet metal strips (12) and PTC heating rods (4) including PTC elements arranged therebetween, and a plurality of radiator elements, selected ones of said sheet metal strips (12) of the PTC heating rods (4) being extended laterally beyond the layered structure so as to form electric connecting lugs (14), and further comprising a connector housing (24) connected to the frame (2), **characterized by**
connecting elements (16; 18) accommodated in the connector housing (24), said connecting elements (16; 18) each defining a connector tongue (20; 22) and at least one contact tongue receptacle (28) by means of which a plug contact is formed between the connecting element (16; 18) and an associated connecting lug (14), wherein the connecting elements (16; 18) each comprise a connection web (30; 32) bridging a plurality of the layers of the layered structure and having formed thereon by means of sheet metal bending, for each forming a contact tongue receptacle (28), at least two brackets (28.2, 28.4; 28.1, 28.3, 28.5), wherein the brackets (28) comprise bracket arms (36) bent towards each other from opposite directions as well as a bracket base (34) provided in opposed relationship with the free ends of the bracket arms (36), wherein, in the insertion direction of the connecting lugs (14), the dimensions of the bracket base (34) are larger than those of the bracket arms (36) and wherein the bracket base (34) is formed at right angles to the connection web (30; 32).

2. The electric heating device according to the claim 1, **characterized by** a ground connecting element (18) and a positive connecting element (16), said ground connecting element (18) defining a ground connector tongue (22) in the connector housing (24) and the positive connecting element (16) defining a positive connector tongue (20) in the connector housing (24).

3. The electric heating device according to the claim 1, **characterized in that** the bracket base (34) is connected to the connection web (30; 32) via a bracket fastening portion (38) extending parallel to the connection web (30; 32).

4. The electric heating device according to claim 1, **characterized in that** the bracket base (34) is formed by free-cutting relative to the connection web (30; 32) and that one of the bracket arms (36.1) is formed by free-cutting relative to the bracket base (34) and the other bracket arm (36.2) is formed by free-cutting relative to the connection web (30; 32).

5. The electric heating device according to one of the preceding claims, **characterized in that** the connector tongue (20; 22) extends at right angles to the connection web (30; 32) of the associated connecting element (16; 18).

6. The electric heating device according to one of the preceding claims, **characterized in that** the connecting lugs (14) have a width that is smaller than that of the sheet metal strips (12) and that the bracket (28) assigned to a connecting lug (14) rests on a bridge between the connecting lug (14) and the associated sheet metal strip (12).

7. The electric heating device according to claim 6, **characterized in that** at least two brackets (28.1, 28.3) of a respective connecting element (16; 18) rest on the bridge between the sheet metal strip (12) and the connecting lug (14).

8. The electric heating device according to one of the preceding claims, **characterized in that** all the connecting lugs (14) are connected electrically via the connecting elements (16; 18).

9. The electric heating device according to one of the preceding claims, **characterized in that** the connecting lugs (14) are secured in position in the connector housing (24) and that the connector housing (24) is attached to the frame (2).

10. The electric heating device according to one of the preceding claims, **characterized in that** the frame (2) and the connector housing (24) are made of plastic.

## Revendications

1. Dispositif de chauffage électrique pour un véhicule automobile avec un cadre (2) dans lequel est prévue une structure en couches comprenant plusieurs bandes de tôle (12) parallèles et des barres de chauffage CTP (4) comportant des éléments CTP disposées entre elles et plusieurs éléments de radiateur, des bandes de tôle (12) sélectionnées des barres de chauffage CTP (4) étant prolongées latéralement au-delà de la structure en couches pour former des pattes de connexion électrique (14), et avec un boîtier de fiche (24) relié au cadre (2), **caractérisé par**
des éléments de connexion (16 ; 18) logés dans le boîtier de fiche (24) et qui forment chacun une languette de fiche (20 ; 22) et au moins un logement de languette de contact (28), au moyen desquels un contact de fiche est formé entre l'élément de connexion (16, 18) et une patte de connexion associée (14), les éléments de connexion (16, 18) comprenant chacune une barrette de connexion (30 ; 32) qui enjambe plusieurs couches de la structure en couches, barrette sur laquelle sont disposées au moins deux languettes (28.2, 28.4 ; 28.1, 28.3, 28.5) formées par pliage de la tôle pour former respectivement un logement de languettes de contact (28), les languettes (28) comprenant des bras de languette (36) courbés l'un vers l'autre et dans des directions opposées et une base de languette (34) prévue en face des extrémités libres des bras de languette (36), la base de languette (34) ayant une extension plus grande que les bras de languette (36) dans la direction d'insertion des pattes de connexion (14) et la base de languette (34) étant formée à angle droit par rapport à la barrette de connexion (30 ; 32).

2. Dispositif de chauffage électrique selon la revendication 1, **caractérisé par** un élément de connexion à la terre (18) et un élément de connexion à la borne « + » (16), l'élément de connexion à la terre (18) formant une languette de connexion à la terre (22) dans le boîtier de la fiche (24) et l'élément de connexion à la borne « + » (16) formant une languette de connexion à la borne « + » (20) dans le boîtier de la fiche (24).

3. Dispositif de chauffage électrique selon la revendication 1, **caractérisé en ce que** la base de languette (34) est connectée à la barrette de connexion (30 ; 32) par une partie de fixation de la languette (38) s'étendant parallèlement à la barrette de connexion (30 ; 32).

4. Dispositif de chauffage électrique selon la revendication 1, **caractérisé en ce que** la base de languette (34) est formée par découpage en face de la barrette de connexion (30 ; 32) et l'un des bras de languette (36.1) est formé par découpage en face de la base de languette (34) et l'autre bras de languette (36.2) est formé par découpage en face de la barrette de connexion (30, 32).

5. Dispositif de chauffage électrique selon l'une des revendications précédentes, **caractérisé en ce que** la languette de fiche (20 ; 22) s'étend à angle droit par rapport à la barrette de connexion (30 ; 32) de l'élément de connexion associé (16 ; 18).

6. Dispositif de chauffage électrique selon l'une des revendications précédentes, **caractérisé en ce que** les pattes de connexion (14) sont conçues avec une largeur inférieure à celle des bandes de tôle (12) et que la languette (28) associée à une patte de connexion (14) repose sur une transition entre la patte de connexion (14) et la bande de tôle (12) associée.

7. Dispositif de chauffage électrique selon la revendication 6, **caractérisé en ce qu'**au moins deux languettes (28.1, 28.3) d'un élément de connexion respectif (16 ; 18) reposent sur la transition entre la bande de tôle (12) et la patte de connexion (14).

8. Dispositif de chauffage électrique selon l'une des revendications précédentes, **caractérisé en ce que** toutes les pattes de connexion (14) sont reliées électriquement par l'intermédiaire des éléments de connexion (16 ; 18).

9. Dispositif de chauffage électrique selon l'une des revendications précédentes, **caractérisé en ce que** les pattes de connexion (14) sont fixées dans le boîtier de fiche (24) et que le boîtier de fiche (24) est enfiché sur le cadre (2).

10. Dispositif de chauffage électrique selon l'une des revendications précédentes, **caractérisé en ce que** le cadre (2) et le boîtier de fiche (24) sont en matière synthétique.
